**Europäisches Patentamt**

(19) **European Patent Office**

**Office européen des brevets**

(11) Numéro de publication: **0 247 493**
**B1**

(12) **FASCICULE DE BREVET EUROPEEN**

(45) Date de publication du fascicule du brevet:
04.10.89

(51) Int. Cl.⁴: **F28D 15/02, F24J 2/44**

(21) Numéro de dépôt: **87107229.4**

(22) Date de dépôt: **19.05.87**

(54) Dispositif pour le transfert passif de chaleur.

(30) Priorité: **22.05.86 LU 86434**

(43) Date de publication de la demande:
**02.12.87 Bulletin 87/49**

(45) Mention de la délivrance du brevet:
**04.10.89 Bulletin 89/40**

(84) Etats contractants désignés:
**DE ES FR GB GR IT**

(56) Documents cités:
WO-A-83/02149
FR-A- 2 390 685
GB-A- 2 103 782
GB-A- 2 158 220
US-A- 4 340 030

PATENT ABSTRACTS OF JAPAN,
vol. 9, no. 114 (M-380)[1837], 18 mai 1985; &
JP-A-60 290 (MATSUSHITA DENKI SANGYO
K.K.) 05-01-1985
PATENT ABSTRACTS OF JAPAN,
vol. 9, no. 213 (M-408)[1936], 30 août 1985; &
JP-A-60 71 855 (NICHIWA ARUMINIUMU
K.K.) 23-04-1985
PATENT ABSTRACTS OF JAPAN,
vol. 7, no. 287 (M-264)[1432], 21 décembre 1983; &

(73) Titulaire: **EUROPÄISCHE ATOMGEMEINSCHAFT
(EURATOM), Bâtiment Jean Monnet Plateau du
Kirchberg, L-2920 Luxembourg(LU)**

(72) Inventeur: **De Beni, Gianfranco, Via Montecalvo, 40,
I-21020 Cadrezzate (Va)(IT)**
Inventeur: **Friesen, Rudolf, Via Don Milani, 6,
I-Biandronno (Va)(IT)**

(74) Mandataire: **Weinmiller, Jürgen,
Lennéstrasse 9 Postfach 24, D-8133 Feldafing(DE)**

(56) Documents cités: (suite)
JP-A-58 160 767 (ZENERARU K.K.) 24-09-1983
PATENT ABSTRACTS OF JAPAN,
vol. 7, no. 203 (M-241)[1348], 8 septembre 1983; &
JP-A-58 102 057 (MATSUSHITA DENKI SANGYO
K.K.) 17-06-1983

**Description**

L'invention se réfère à un dispositif pour le transfert passif de chaleur entre une source de chaleur et un condenseur à l'aide d'une liquide vaporisable et d'un cycle à deux temps commandé par une vanne à flotteur, ledit dispositif comportant, outre ledit condenseur et ladite vanne à flotteur, un bouilleur chauffé par ladite source et un réservoir de liquide, le bouilleur fournissant, pendant un premier temps, de la vapeur au condenseur qui alimente alors le réservoir en liquide, et recevant, pendant le second temps, du liquide à partir dudit réservoir.

On parle d'un transfert passif de chaleur lorsqu'il n'y a pas une autre source d'énergie que la chaleur, donc s'il n'y a ni pompes ni compresseurs. De tels dispositifs pour le transfert passif de chaleur sont connus par exemple pour le chauffage domestique, lorsque la source de chaleur, une chaudière, se trouve au sous-sol et les radiateurs aux étages. Il s'établit alors une circulation naturelle d'un liqui caloporteur entre la chaudière et les radiateurs. Cette circulation naturelle ne s'établit cependant plus, lorsque la source de chaleur est disposée au-dessus des radiateurs. Tel est par exemple le cas, lorsqu'un collecteur solaire, qui est disposé sur le toit d'un immeuble, est appelé à livrer de la chaleur à cet immeuble.

Pour une telle application, on a proposé dans le document EP-B-0 046 043 un système à deux enceintes, qui sont reliées par au moins un tuyau et dont l'une des enceintes est associée au collecteur solaire et l'autre peut être disposée en-dessous de la première enceinte. Cette autre enceinte comporte un coussin élastique, par exemple un piston de gaz compressible et reçoit pendant la journée de la vapeur qui y condense, ce qui augmente progressivement la pression interne de l'enceinte. Pendant la nuit où la production de vapeur dans l'enceinte supérieure est arrêtée, le liquide remonte de l'enceinte élastique vers la première enceinte.

La taille des enceintes doit être telle que l'enceinte supérieure ne se vide jamais complètement pendant une journée ensoleillée. Afin de réduire la taille des enceintes, on a déjà proposé par le document GB-B-21 03 782 un dispositif de transfert passif de chaleur qui fonctionne selon un cycle à deux temps sous commande d'une vanne à flotteur disposée dans un réservoir supplémentaire. Ce réservoir est situé à proximité de l'enceinte supérieure et reçoit du liquide provenant du condenseur. Dès que le liquide dans ce réservoir atteint un certain niveau, la vanne est ouverte et déverse du liquide caloporteur dans l'enceinte associée au collecteur solaire et servant de bouilleur. Le niveau de liquide dans ce réservoir baisse donc rapidement, la vanne à flotteur se referme et le cycle recommence. Pendant que le soleil brille, la vapeur produite dans le bouilleur descend vers le condenseur pour s'y condenser. Le liquide est donc chassé vers le haut en direction du réservoir où règne une pression qui est inférieure à la pression dans le condenseur dû à la colonne de liquide entre ces deux éléments. Pour que le déversement de liquide vers le bouilleur puisse fonctionner pendant le second temps du cycle, il faut égaliser les pressions dans le réservoir et le bouilleur. Il y a donc deux liaisons entre le bouilleur et le réservoir, à savoir une liaison pour le transfert de liquide caloporteur, qui ne comporte qu'un clapet anti-retour, et une liaison entre les espaces vapeur de ces deux enceintes, cette liaison étant susceptible d'être obturée par la vanne à flotteur.

On a observé pendant des essais que la température dans le réservoir monte notablement pendant le second temps du cycle, car une quantité non négligeable de vapeur passe du bouilleur à travers la vanne à flotteur vers le réservoir. Le bouilleur, qui doit travailler à une température supérieure à celle du réservoir, se trouvera à un niveau de température trop élevé, ce qui réduit le rendement du capteur solaire.

L'invention a pour but de pallier ces inconvénients et de proposer un dispositif de transfert passif de chaleur assurant un meilleur rendement en association avec un collecteur solaire comme source primaire d'énergie.

L'invention part, selon le préambule de la revendication 1, dudit document GB-B-21 03 782, et elle est caractérisée par le fait qu'un séparateur de vapeur est interposé entre le bouilleur et le condenseur et que la vanne à flotteur est disposée dans ce séparateur et fait communiquer, pendant le premier temps, l'espace vapeur du séparateur avec l'espace vapeur du bouilleur, et pendant le second temps, l'espace vapeur du séparateur avec l'espace vapeur du réservoir, tout en coupant ces communications dans le temps inverse respectif.

Des vannes anti-retour sont disposées dans les tuyaux de communication traversés par le liquide et reliant les différents éléments du dispositif.

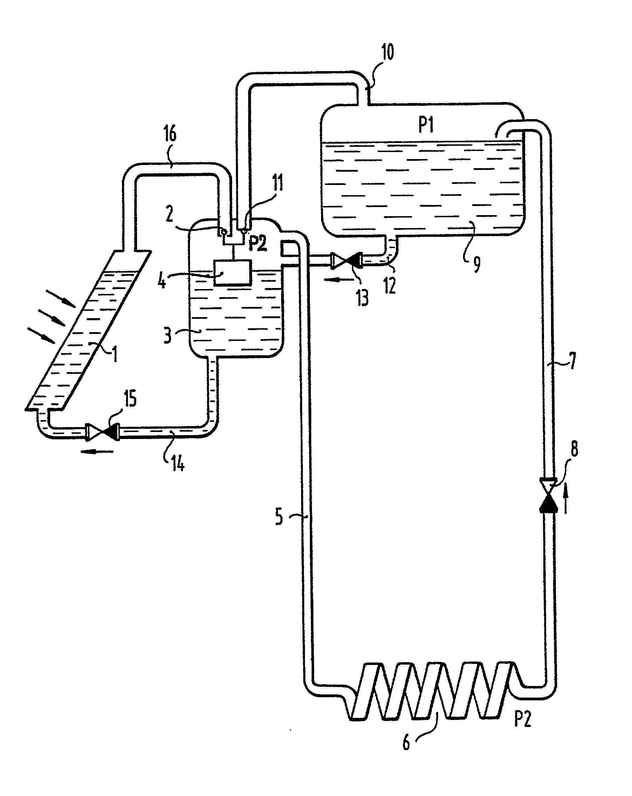

L'invention sera décrit ci-après plus en détail à l'aide d'un exemple préféré de réalisation et de la figure unique, qui montre schématiquement un dispositif selon l'invention.

Un bouilleur 1 est associé ou intégré à un collecteur solaire non représenté, et il est presque complètement rempli d'un liquide caloporteur, qui est chauffé soit directement par l'irradiation, soit par l'intermédiaire d'un fluide tel que de l'eau. Le liquide caloporteur est un produit à température d'ébullition basse tel qu'un composé fluorocarbone. L'espace vapeur du bouilleur est relié par un tuyau 16 à l'espace vapeur d'une enceinte 3, qui fait office d'un réservoir intermédiaire et d'un séparateur. La partie inférieure de ce sépa rateur 3 est reliée à travers un tuyau 14 et un clapet antiretour 15 à l'espace liquide du bouilleur 1. Le clapet n'admet le passage de liquide qu'en direction du bouilleur.

A l'intérieur du séparateur 3, il y a un flotteur 4, qui est associé à une vanne à double effet 2, 11, obturant alternativement l'extrémité du tuyau 16 et l'extrémité d'un autre tuyau 10, qui relie l'espace vapeur du séparateur 3 à l'espace vapeur d'un réservoir 9 situé à un niveau plus élevé que le bouilleur 1 et le séparateur. 3. Lorsque le liquide atteint, en remplissant le séparateur 3, un niveau prédéterminé, le tuyau 10 est bloqué et le tuyau 16 fait communiquer le bouilleur 1 avec le séparateur 3. Cela correspond au premier temps du cycle de travail. Si le niveau baisse dans le séparateur 3, le flotteur 4 se déplace et ferme la vanne 2 dans le tuyau 16 tout en ouvrant simultanément la vanne 11 dans le tuyau 10. Comme il est connu, il est possible de prévoir une certaine hystérésis, c'est-à-dire un écart entre le niveau auquel on passe du premier temps au second temps et le niveau auquel on passe en retour au premier temps.

L'espace liquide du réservoir 9 est relié d'une part par un tuyau 12 au séparateur 3 et d'autre part par un tuyau 7 à un condenseur 6 situé notablement plus bas que les autres organes du dispositif. Dans ces deux tuyaux 7 et 12, il y a des clapets anti-retour 8 et 13 interdisant d'une part la descente de liquide dans le tuyau 7 et d'autre part le transfert de liquide du séparateur 3 vers le réservoir 9. Enfin, le condenseur 6 est relié par un tuyau vapeur 5 à l'espace vapeur du séparateur 3.

Le fonctionnement du dispositif est le suivant:

Après une nuit de repos, les niveaux de liquide dans le bouilleur 1 et le séparateur 3 sont égaux et suffisants pour que le flotteur 4 ferme le tuyau 10 et maintienne ouverte la communication entre l'espace vapeur du bouilleur et l'espace vapeur du séparateur 3 à travers le tuyau 16. Dès que le soleil commence à produire de la vapeur dans le bouilleur 1, cette vapeur passe à travers le tuyau 16 dans le séparateur, où des gouttelettes de liquide sont séparées de cette vapeur avant que cette dernière descende par le tuyau 5 vers le condenseur 6. La vapeur y est refroidie et se condense, le liquide remontant à travers le clapet 8 et le tuyau 7 vers le réservoir 9. Etant donné que la vanne 11 est fermée, ce liquide ne peut pas revenir dans le séparateur par les tuyaux 12, car la pression P1 dans le réservoir 9 est notablement inférieure à la pression P2 de l'espace vapeur du séparateur 3, cela étant dû à la colonne de liquide dans le tuyau 7 entre le condenseur 6 et le réservoir 9. Le liquide s'accumule donc dans le réservoir, alors que le niveau dans le séparateur 3 baisse.

Dès que ce niveau atteint une valeur prédéterminée, la vanne 2 dans le tuyau 16 se ferme et la vanne 11 dans le tuyau 10 s'ouvre. La pression dans le séparateur 3 devient aussitôt égale à la pression P1 du réservoir et du liquide passe par le tuyau 12 et le clapet 13 dans le séparateur 3. Le niveau de liquide augmente donc dans le séparateur et le flotteur 4 referme la vanne 11 et rouvre la vanne 2. Le second temps du cycle pendant lequel du liquide est transféré du réservoir vers le séparateur est donc de durée courte par rapport au premier temps. Même si la production de vapeur continue pendant ce second temps dans le bouilleur 1, une pression dangereuse ne peut pas s'établir pendant ce court laps de temps. Le cas échéant, on peut prévoir une vanne de décharge à titre de sécurité. Cette décharge peut être réalisée par le clapet 15 lorsque celui-ci est conçu pour une fermeture incomplète.

Grâce à la fermeture de tuyau 16 par la vanne 2, la quantité de vapeur chaude transférée du bouilleur vers le réservoir pendant le second temps du cycle est très réduite. Le réservoir ne peut donc pratiquement pas s'échauffer au-delà de la température à laquelle le liquide sort du condenseur. Un autre avantage du séparateur réside dans le fait que la vapeur descendant par le tuyau 5 vers le condenseur est relativement sèche, ce qui réduit la quantité de liquide à transférer vers le réservoir 9. Ces deux effets sont susceptibles d'améliorer le rendement du transfert de chaleur surtout pendant des périodes de faible ensoleillement, c'est-à-dire de basse température du collecteur solaire.

L'invention n'est pas limitée à l'exemple de réalisation décrit ci-dessus en détail. On peut dans le cadre de l'invention munir la vanne à flotteur de moyens assurant une commutation nette entre les deux positions en réduisant les périodes transitoires. De tels moyens sont par exemple décrits dans le document GB-B-21 03 782 cité ci-dessus.

## Revendications

1. Dispositif pour le transfert passif de chaleur entre une sourse de chaleur et un condenseur à l'aide d'un liquide vaporisable et d'un cycle à deux temps commandé par une vanne à flotteur, ledit dispositif comportant outre ledit condenseur et ladite vanne à flotteur, un bouilleur chauffé par ladite source et un réservoir de liquide, le bouilleur fournissant, pendant un premier temps, de la vapeur au condenseur qui alimente alors le réservoir en liquide, et recevant, pendant le second temps, du liquide à partir dudit réservoir, caractérisé en ce qu'un séparateur de vapeur (3) est interposé entre le bouilleur (1) et le condenseur (6) et que la vanne à flotteur (2, 4, 11) est disposée dans ce séparateur et fait communiquer, pendant le premier temps, l'espace vapeur du séparateur avec l'espace vapeur du bouilleur, et, pendant le second temps, l'espace vapeur du séparateur avec l'espace vapeur du réservoir (9), tout en coupant ces communications dans le temps inverse respectif.

2. Dispositif selon la revendication 1, caractérisé en ce que des vannes anti-retour (8, 13, 15) sont disposées dans au moins un des tuyaux (7, 12, 14) qui relient le réservoir (9), le condenseur (6), le séparateur (3) et le bouilleur (1), et qui sont traversés par le liquide.

3. Dispositif selon l'une des revendications précédentes, caractérisé en ce que le bouilleur (1) est intégré à un collecteur solaire.

## Patentansprüche

1. Vorrichtung zur passiven Wärmeübertragung zwischen einer Wärmequelle und einem Kondensator mit Hilfe einer verdampfbaren Flüssigkeit und eines von einem Schwimmerventil gesteuerten Zweiphasen-Zyklus, wobei die Vorrichtung außer dem Kondensator und dem Schwimmerventil einen von der Quelle erhitzten Heizkessel und einen Flüssigkeitstank aufweist und wobei der Heizkessel während einer ersten Phase den Kondensator mit Dampf versorgt, der dann den Tank mit Flüssigkeit speist, und während der zweiten Phase Flüssigkeit vom Tank empfängt, dadurch gekennzeichnet, daß ein Dampfseparator (3) zwischen den Heizkessel (1) und den Kondensator (6) geschaltet ist, und daß das Schwimmerventil (2, 4, 11) in diesem Separator angeordnet ist und während der ersten Phase den Dampfraum des Separators mit dem Dampfraum des Heizkessels und während der zweiten Phase den Dampfraum des Separators mit dem Dampfraum des Tanks (9) verbindet, und in der jeweils anderen Phase diese Verbindungen unterbricht.

2. Vorrichtung nach Anspruch 1, dadurch gekennzeichnet, daß Rückschlagventile (8, 13, 15) in mindestens einem der Rohre (7, 12, 14) angeordnet sind, die den Tank (9), den Kondensator (6), den Separator (3) und den Heizkessel (1) verbinden und die von der Flüssigkeit durchströmt werden.

3. Vorrichtung nach einem der vorhergehenden Ansprüche, dadurch gekennzeichnet, daß der Heizkessel (1) in einen Sonnenkollektor integriert ist.

**Claims**

1. a device for the passive heat transfer between a heat source and a condensor by means of a vaporizable liquid and a two-time cycle controlled by a float valve, said device comprising in addition to said condenser and said float valve a boiler heated by said source and a liquid tank, the boiler feeding, during a first time period, steam to the condenser which then feeds the tank with liquid, and receiving, during the second time period, liquid from said tank, characterized in that a vapour separator (3) is interposed between the boiler (1) and the condenser (6) and that the float valve (2, 4, 11) is disposed in this separator and, during a first time period, makes the vapour zone of the separator communicate with the vapour zone of the boiler, and, during the second time period, makes the vapour zone of the separator communicate with the vapour zone of the tank (9), while cutting off these connections during the respective inverse time period.

2. A device according to claim 1, characterized in that no-return valves (8, 13, 15) are disposed in at least one of the tubes (7, 12, 14) which connect the tank (9), the condenser (6), the separator (3) and the boiler (1), and which are passed through by the liquid.

3. A device according to one of the preceding claims, characterized in that the boiler (1) is integral with a solar collector.